# EUROPÄISCHE PATENTSCHRIFT

(11) **EP 1 342 519 B1**
(45) Veröffentlichungstag und Bekanntmachung des Hinweises auf die Patenterteilung: **11.02.2009**
(21) Anmeldenummer: 03090052.6
(22) Anmeldetag: 05.03.2003
(51) Int. Cl.: B23B 5/16

(54) **Vorrichtung zum Abmanteln eines ummantelten Leitungsrohres**
Device for dismanteling a insulated pipe
Dispositif de dérobage d'un tuyau isolé

(30) Priorität: 08.03.2002 DE 10211205
(43) Veröffentlichungstag der Anmeldung: 10.09.2003
(73) Patentinhaber: Strawa AG, 7310 Bad Ragaz (CH)
(72) Erfinder: Speckemeyer, Jens, 45475 Mülheim (DE); Eberle, Beat, 7310 Bad Ragaz (CH)
(74) Vertreter: Hasler, Erich

(56) Entgegenhaltungen:
- DE-U- 29 713 050
- GB-A- 1 339 531

## Beschreibung

Die Erfindung betrifft eine Vorrichtung zum Abmanteln eines mit einer Mantelschicht versehenen Leitungsrohres gemäß dem Oberbegriff des Patentanspruches 1.

Aus der EP 0689928 A2 ist ein Verfahren und eine Vorrichtung zur Bearbeitung von Kunststoffrohren aus Polyolefinen, PVC usw. bekannt. Insbesondere soll die auf solche Rohre aufgebrachte Sperrschicht mechanische entfernt werden, um die Rohre mit anderen Rohren und Fittings verschweißen zu können. Dazu wird eine Vorrichtung vorgeschlagen, die aus einem als Hohlkörper ausgebildeten Messerträger besteht mit einem Zentrierdom für die temporäre Aufnahme des Kunststoffrohres. Im Messerträger ist eine verstellbare Schäleinrichtung in Form eines Schälmessers angeordnet. Im Endbereich des jeweiligen Kunststoffrohres befindet sich eine Stützhülse, die endseitig mit einem Flansch versehen ist. Der Messerträger ist in einem Endbereich mit einer Aussparung zur Aufnahme des als Stopfen ausgebildeten Zentrierdornes versehen, so dass der Messerträger nach Einsetzen des Zentrierdornes einseitig verschlossen ist. Die Stirnfläche des Flanschteiles des Zentrierdornes dient als Anschlag für die Begrenzung der abzumantelnden Länge der Sperrschicht.

Die bekannte Vorrichtung ist für das Abmanteln eines mit einem Kunststoff ummantelten metallischen Leitungsrohres mit Wanddicken < 0,5 mm insbesondere < 0,2 mm nicht geeignet. Eine solche Abmantelung ist erforderlich, um beispielsweise eine Rohrverbindung, wie in Figur 1 der DE 19637688 dargestellt, herstellen zu können.

Aufgabe der Erfindung ist es, eine Vorrichtung der gattungsmäßigen Art zum Abmanteln eines ummantelten Leitungsrohres zu schaffen, mit der problemlos mit einem Kunststoff ummantelte metallische Leitungsrohre mit Wanddicken < 0,5 mm, insbesondere < 0,2 mm, abgemantelt werden können.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung ist das Zentrierelement als separates in den Messerträger und in das Leitungsrohr temporär einschiebbares Kombiteil ausgebildet. Es besteht aus einem Zentrierdorn und einem damit verbundenen Stützdorn. Der Messerträger weist einen den Zentrierdorn aufnehmenden Bereich auf, der auch als Anschlag für die Begrenzung der Abschällänge ausgebildet ist und eine Lagerung für den Zentrierdorn bildet.

Der Vorteil der Erfindung ist darin zu sehen, dass das dünnwandige metallische Leitungsrohr durch die Einführung des Stützdornes von innen her beim Abschälen ausreichend abgestützt ist. Der mit dem Stützdom verbundene Zentrierdom erfüllt eine Doppelfunktion. Zum Einen wird er als quasi Handgriff zum Herausziehen des Stützdornes aus dem Leitungsrohr genutzt und zum Anderen bildet er mit dem aufnehmenden Bereich des Messerträgers eine Lagerstelle, so dass der Messerträger ohne Schwierigkeiten gedreht werden kann und das im Messerträger angeordnete Schälmesser zu Beginn des Schälvorganges eine ausreichende Führung hat.

In vorteilhafter Weiterbildung ist zum leichteren Einführen des Stützdornes der Endbereich mit einem kegelstumpfartigen Abschnitt versehen. In gleicher Weise ist der Stimseitenbereich des Zentrierdornes abgerundet. Um den Zentrierdorn besser als quasi Handgriff benutzen zu können, ist nach einem weiteren Merkmal der Erfindung der Mittenbereich des Zentrierdornes als Griffmulde ausgebildet.

Für das Umstecken des Messerträgers weist der Zentrierdorn einen kleineren Durchmesser auf als der Stützdom und der Übergang vom Zentrierdom zum Stützdom ist als Anschlagfläche ausgebildet.

Im Sinne der Bildung einer Lagerstelle hat es sich als vorteilhaft herausgestellt, wenn der den Zentrierdorn aufnehmende Bereich des Messerträgers als separate Buchse ausgebildet ist, wobei die Buchse in einfacher Weise in den Messerträger einpressbar ist. Nach einem weiteren Merkmal der Erfindung ist im Stirnseitenbereich der Buchse eine den Stützdorn aufnehmende Ausnehmung vorgesehen. Dies bedeutet, dass nach dem Abziehen des Messerträgers der Stützdom über die Stirnseite des Leitungsrohres etwas, vorzugsweise 1-2 mm, hervorsteht. Dies erleichtert den Ansatz des Abschälens nach dem Umstecken des Messerträgers.

Der Messerträger kann im Sinne einer einfachen Herstellung aus einem schlagfesten Kunststoff gefertigt sein, während die Buchse aus Metall ist.

Zur Vermeidung eines Anritzens des dünnwandigen Leitungsrohres beim Abschälen weist das Schälmesser eine abgerundete Schneide auf.

Weitere Merkmale, Vorteile und Einzelheiten der Erfindung ergeben sich aus der nachfolgenden Beschreibung von einem in einer Zeichnung dargestellten Ausführungsbeispiel.

Es zeigen:
- **Figur 1**: in einer Längsansicht eine erste Ausführungsform des Kombiteiles,
- **Figur 2**: eine zweite Ausführungsform des Kombiteiles,
- **Figur 3**: in einem Längsschnitt ein in den Messerträger eingestecktes Kombiteil,
- **Figur 4**: nach dem Einschieben des Stützdornes des Kombiteiles in das Leitungsrohr,
- **Figur 5**: Beginn des Abmantelns nach dem Umstecken des Messerträgers,
- **Figur 6**: Frontansicht von Figur 5,
- **Figur 7**: in vergrößerter Darstellung das Schälmesser.

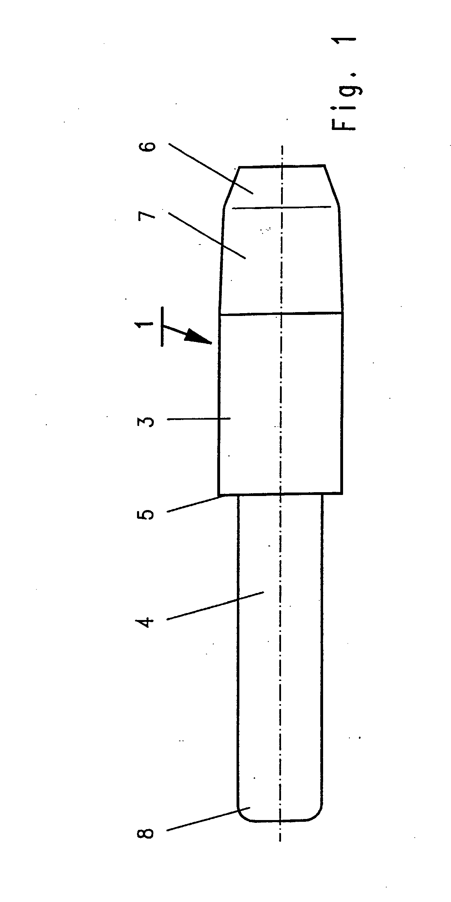

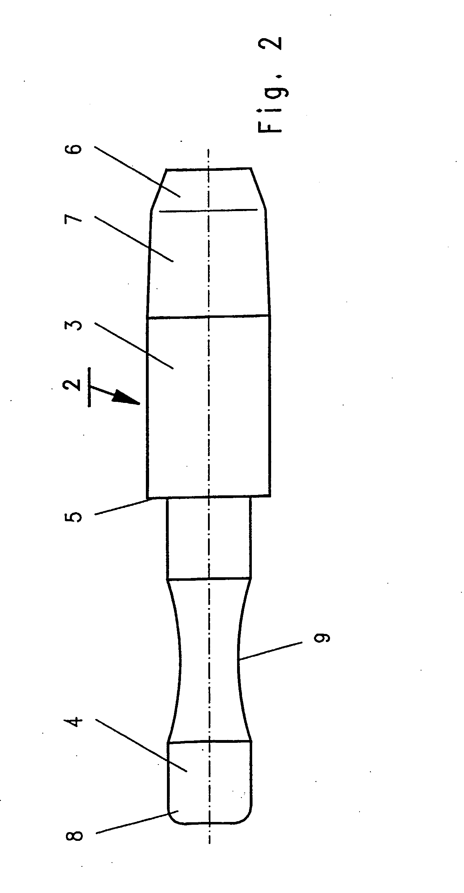

In den **Figuren 1** **und** **2** sind in einer Längsansicht zwei verschiedene Ausführungsformen des erfindungsgemäß als Kombiteil 1, 2 ausgebildeten Zentrierelementes dargestellt. Jedes Kombiteil 1, 2 besteht aus einem Stützdorn 3 und einem damit verbundenen Zentrierdorn 4.

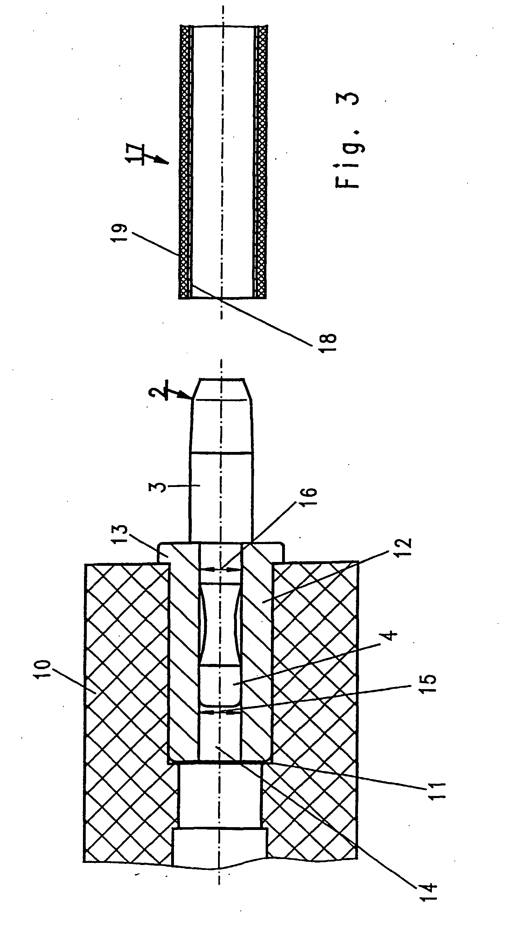

Der jeweilige Zentrierdorn 4 ist im Durchmesser geringer als der Stützdom 3, wobei der Übergang vom Zentrierdorn 4 zum Stützdorn 3 als Anschlagfläche 5 ausgebildet ist. Zum leichteren Einführen des Stützdomes 3 in das Leitungsrohr (**Figur 3**) ist dieser in seinem Endbereich kegelstumpfartig ausgebildet.

In diesem Ausführungsbeispiel weist der jeweilige Stützdom 3 zwei kegelstumpfartige Abschnitte 6, 7 auf, wobei der stirnseitig angeordnete Abschnitt 6 eine stärkere Kegelneigung aufweist. Ebenso weist zum leichteren Einführen des Zentrierdornes 4 in den Messerträger der stimseitige Bereich eine Abrundung 8 auf.

Für eine bessere Handhabung des Kombiteiles, ist in der zweiten Ausführungsform gemäß **Figur 2** der Mittenbereich des Zentrierdomes 4 als Griffmulde 9 ausgebildet.

In **Figur 3** ist in einem Längsschnitt die Situation eines in den Messerträger 10 eingesteckten Kombiteiles 2 dargestellt.

Der in dieser Figur nur zum Teil dargestellte Messerträger 10 ist als langgestreckter Hohlkörper aus einem schlagfesten Kunststoff hergestellt.

In einer Ausnehmung 11 ist eine den Zentrierdom 4 des Kombiteiles 2 aufnehmende Buchse 12 eingepresst. Diese weist an einer Stirnseite einen Anschlagbund 13 auf. Vorzugsweise ist die Buchse 12 aus einem Metall gefertigt.

Der Durchmesser 15 der Bohrung 14 der Buchse 12 ist in Bezug auf den Durchmesser 16 des Zentrierdornes 4 so gewählt, dass die Paarung eine Lagerstelle bildet, damit ohne Schwierigkeiten der Messerträger 10 um den Zentrierdorn 4 gedreht werden kann.

Rechts in **Figur 3** ist das abzumantelnde Rohr dargestellt. Es ist als Verbundrohr 17 ausgebildet mit einem dünnwandigen metallischen Leitungsrohr 18, das stoffschlüssig mit einer Ummantelung 19 aus Kunststoff oder dergleichen verbunden ist.

Aus Darstellungsgründen ist die Wanddicke des metallischen Leitungsrohres 18 übertrieben groß dargestellt. In Wirklichkeit liegt das Verhältnis von Wanddicke metallisches Leitungsrohr 18 zu Wanddicke Ummantelung 19 im Bereich von 1:10. Beispielsweise beträgt die Wanddicke des metallischen Leitungsrohres 0,1 mm, während die Wanddicke der Ummantelung 19 bei einem Millimeter liegt.

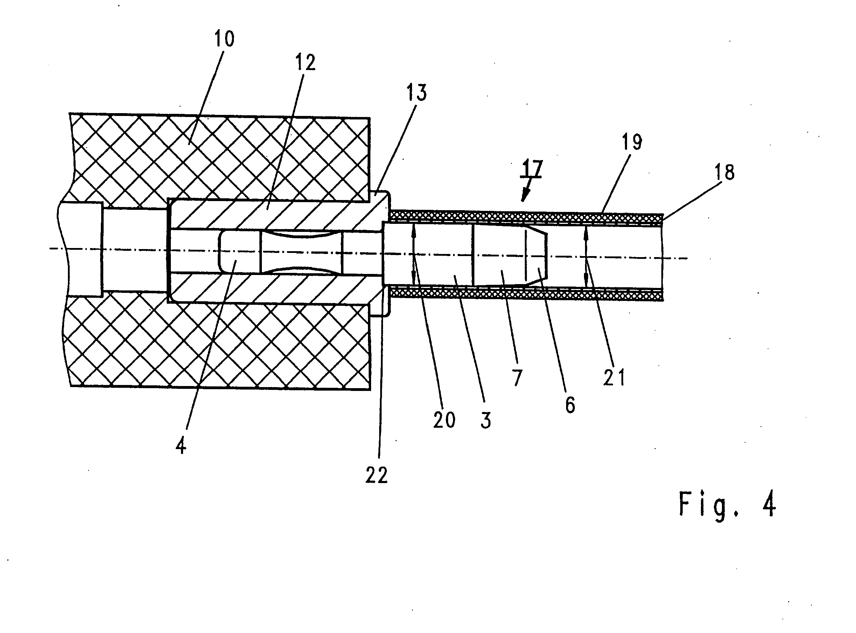

In **Figur 4** ist in einem Längsschnitt die Situation des in das metallische Leitungsrohr 18 des Verbundrohres 17 eingesteckten Stützdomes 3 dargestellt. Gemäß der vorherigen Darstellung in **Figur 3** wird zur Erleichterung des Einschiebens des Stützdomes 3 in das metallische Leitungsrohr 18 der Messerträger 10 quasi als Handhabungsgerät benutzt, um genügend Einschiebekraft aufbringen zu können.

Das anfängliche Einschieben wird durch die kegelstumpfartigen Abschnitte 6, 7 des Stützdomes 3 erleichtert. Der nachfolgende zylindrische Abschnitt ist im Durchmesser 20 in Bezug auf den Innendurchmesser 21 des metallischen Leitungsrohres 18 so gewählt, dass der Stützdorn 3 nur mit Kraftaufwand einschiebbar ist. Dadurch wird sichergestellt, dass der Stützdom 3 das dünnwandige metallische Leitungsrohres 18 ausreichend von innen her abstützt.

In Abwandlung zur Darstellung in **Figur 3** weist der Stimseitenbereich des Anschlagbundes 13 der Buchse 12 eine Ausnehmung 22 zur Aufnahme des Stützdomes 3 auf. Die Tiefe dieser Ausnehmung liegt im Bereich von 1 - 2 mm.

Nicht dargestellt ist, dass nach dem Einstecken des Stützdornes 3 in das metallische Leitungsrohr 18 der Messerträger 10 zusammen mit der Buchse 12 vom Zentrierdom 4 abgezogen und um 180 ° geschwenkt wird.

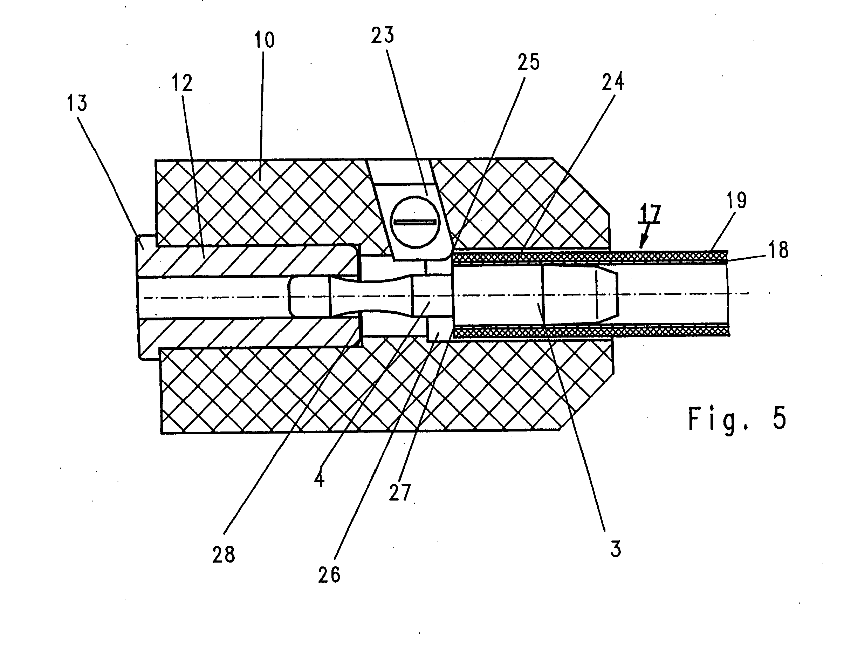

Die gegenüberliegende Seite des Messerträgers 10, die auch das Schälmesser 23 aufweist, wird auf den Zentrierdorn 4 aufgesteckt, wobei der Anfangsbereich des Verbundrohres 17 in den Messerträger 10 eingeschoben wird. Diesen Zustand zeigt **Figur 5****.**

In dieser Darstellung ist zu erkennen, dass nach dem Schwenken des Messerträgers 10 um 180 °der Zentrierdorn 4 von der Innenseite her in die Buchse 12 eingeschoben wird. Gleichzeitig wird das Verbundrohr 17 in die stimseitige Ausnehmung 24 des Messerträgers 10 eingesteckt.

Diese hier gewählte Darstellung zeigt den Ansatz des Schälmessers 23 am Verbundrohr 17. Nach dem Einstecken kommt die Stirnseite der Ummantelung 19 an der Schneide 25 des Schälmessers 23 zur Anlage. Wird nun infolge der Lagerung des Zentrierdornes 4 in der Buchse 12 der Messerträger 10 gedreht, beginnt der Schälvorgang. Dabei bildet die Stirnseite 26 der Ausnehmung 24 die Begrenzung für das Abschälen. Diese Stirnseite 26 ist versetzt zur Schneide 25 des Schälmessers 23 angeordnet, damit der Schälvorgang ohne Behinderung einsetzen kann. Der Schälvorgang ist beendet, wenn die Stirnseite 27 des metallischen Leitungsrohres 18 an der innenliegenden Stirnseite 28 der Buchse 12 zur Anlage kommt.

Der Abstand zwischen der Schneide 25 des Schälmessers 23 und der innenliegenden Stirnseite 28 der Buchse 12 entspricht der gewünschten Länge der Abmantelung.

Nach Beendigung des Schälvorganges wird der Messerträger 10 abgezogen. Danach kann das Kombiteil 2 durch Anpacken der Griffmulde 9 aus dem metallischen Leitungsrohr 18 herausgezogen werden. Danach steht das abgemantelte Verbundrohr 17 für die gewünschte Verbindung zur Verfügung.

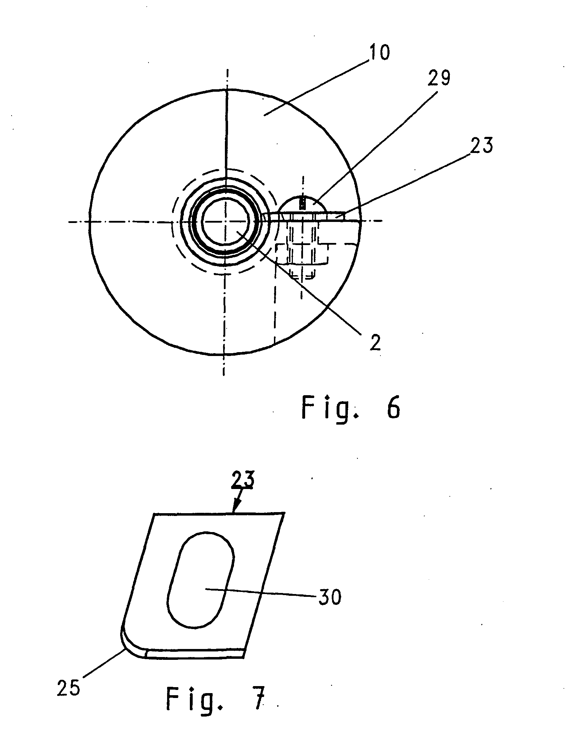

In den **Figuren 6 und 7** ist das Schälmesser 23 und dessen Befestigung dargestellt. Das Schälmesser 23 weist ein Langloch 30 auf, damit es nachgestellt werden kann. Eine im Messerträger 10 angeordnete Befestigungsschraube 29 sorgt für die notwendige Klemmung des Schälmessers 23 im Messerträger.

**Bezugszeichenliste**

| **Nr.** | **Bezeichnung** |
|---|---|
| 1, 2 | Kombiteil |
| 3 | Stützdom |
| 4 | Zentrierdorn |
| 5 | Anschlagfläche |
| 6, 7 | kegelstumpfartiger Abschnitt |
| 8 | Abrundung |
| 9 | Griffmulde |
| 10 | Messerträger |
| 11 | Ausnehmung |
| 12 | Buchse |
| 13 | Anschlagbund |
| 14 | Bohrung |
| 15 | Durchmesser Bohrung |
| 16 | Durchmesser Zentrierdom |
| 17 | Verbundrohr |
| 18 | metallisches Leitungsrohr |
| 19 | Ummantelung |
| 20 | Durchmesser Stützdom |
| 21 | Innendurchmesser metallisches Leitungsrohr |
| 22 | Ausnehmung Anschlagbund Buchse |
| 23 | Schälmesser |
| 24 | Ausnehmung Messerträger |
| 25 | Schneide Schälmesser |
| 26 | Stirnseite Ausnehmung Messerträger |
| 27 | Stirnseite metallisches Leitungsrohr |
| 28 | innenliegende Stirnseite Buchse |
| 29 | Befestigungsschraube |
| 30 | Langloch Schälmesser |

## Patentansprüche

1. Vorrichtung zum Abmanteln eines mit einer Mantelschicht versehenen Leitungsrohres, bestehend aus einem als Hohlkörper ausgebildeten Messerträger, der mit einem einstellbaren und auswechselbaren Schälmesser und einem Zentrierelement versehen sowie mit einem die Abschällänge begrenzenden Anschlag verbunden ist
**dadurch gekennzeichnet,**
**dass** das Zentrierelement als separates in den Messerträger (10) und in das Leitungsrohr temporär einschiebbares Kombiteil (1, 2) ausgebildet ist, bestehend aus einem Zentrierdorn (4) und einem damit verbundenen Stützdorn (3) wobei der Messerträger (10) einen den Zentrierdorn (4) aufnehmenden Bereich aufweist, der auch als Anschlag für die Begrenzung der Abschällänge ausgebildet ist und eine Lagerung für den Zentrierdorn (4) bildet.

2. Vorrichtung nach Anspruch 1
**dadurch gekennzeichnet,**
**dass** der Stützdorn (3) im Endbereich mit einem kegelstumpfartigen Abschnitt versehen ist.

3. Vorrichtung nach Anspruch 2
**dadurch gekennzeichnet,**
**dass** der kegelstumpfartige Abschnitt in zwei Unterabschnitte (6, 7) mit unterschiedlichen Kegelneigungen unterteilt ist.

4. Vorrichtung nach Anspruch 1
**dadurch gekennzeichnet,**
**dass** der Stirnseitenbereich des Zentrierdornes (4) abgerundet (8) ist.

5. Vorrichtung nach Anspruch 1 und 4
**dadurch gekennzeichnet,**
**dass** der Mittenbereich des Zentrierdornes (4) als Griffmulde (9) ausgebildet ist.

6. Vorrichtung nach einem der Ansprüche 1 - 5
**dadurch gekennzeichnet,**
**dass** der Zentrierdorn (4) einen kleineren Durchmesser (16) aufweist als der Stützdorn (3) und der Übergang vom Zentrierdorn (4) zum Stützdorn (3) als Anschlagfläche (5) ausgebildet ist.

7. Vorrichtung nach einem der Ansprüche 1 - 6
**dadurch gekennzeichnet,**
**dass** der den Zentrierdorn (4) aufnehmende Bereich des Messerträgers (10) als separate Buchse (12) ausgebildet ist, die in den Messerträger (10) einpressbar ist.

8. Vorrichtung nach Anspruch 7
**dadurch gekennzeichnet,**
**dass** die Buchse (12) in einem Endbereich einen Anschlagbund (13) aufweist.

9. Vorrichtung nach Anspruch 7 und 8
**dadurch gekennzeichnet,**
**dass** in der Stirnseite des Anschlagbundes (13) eine den Stützdorn (3) aufnehmende Ausnehmung (22) vorgesehen ist.

10. Vorrichtung nach den Ansprüchen 7 - 9
**dadurch gekennzeichnet,**
**dass** der Messerträger (10) aus einem schlagfesten Kunststoff hergestellt ist.

11. Vorrichtung nach den Ansprüchen 7 - 10
**dadurch gekennzeichnet,**
**dass** die Buchse (12) aus Metall hergestellt ist.

12. Vorrichtung nach Anspruch 1
**dadurch gekennzeichnet,**
**dass** das Schälmesser (23) eine abgerundete Schneide (25) aufweist.

## Claims

1. A device for stripping a conduit provided with a jacket layer, consisting of a knife holder, in the form of a hollow body, which is provided with an adjustable and exchangeable paring knife and a centring member and which is connected to a stop limiting the paring length, **characterised in that** the centring member is in the form of a separate multi-purpose part (1, 2) which is temporarily insertable into the knife holder (10) and into the conduit and which consists of a centring mandrel (4) and a support mandrel (3) connected thereto, the knife holder (10) having a region which receives the centring mandrel (4) and which also is in the form of a stop to limit the paring length and forms a mounting for the centring mandrel (4).

2. A device according to claim 1, **characterised in that** the support mandrel (3) is provided in the end region with a portion in the form of a truncated cone.

3. A device according to claim 2, **characterised in that** the portion in the form of a truncated cone is divided into two sub portions (6, 7) having different amounts of taper.

4. A device according to claim 1, **characterised in that** the front end region of the centring mandrel (4) is rounded (8).

5. A device according to claim 1 and 4, **characterised in that** the central region of the centring mandrel (4) is in the form of a recessed grip (9).

6. A device according to any one of claims 1 - 5, **characterised in that** the centring mandrel (4) has a smaller diameter (16) than the support mandrel (3) and the transition from the centring mandrel (4) to the support mandrel (3) is in the form of a stop face (5).

7. A device according to any one of claims 1 - 6, **characterised in that** the region, of the knife holder (10), receiving the centring mandrel (4) is in the form of a separate sleeve (12) which can be inserted into the knife holder (10).

8. A device according to claim 7, **characterised in that** the sleeve (12) has a stop collar (13) in an end region.

9. A device according to claim 7 and 8, **characterised in that** a recess (22) receiving the support mandrel (3) is provided in the front face of the stop collar (13).

10. A device according to claims 7 - 9, **characterised in that** the knife holder (10) is manufactured from an impact-resistant plastics material.

11. A device according to claims 7 - 10, **characterised in that** the sleeve (12) is manufactured of metal.

12. A device according to claim 1, **characterised in that** the paring knife (23) has a rounded cutting edge (25).

## Revendications

1. Dispositif pour dénuder un tube conducteur pourvu d'une couche de gaine constitué par un support de couteau configuré comme un corps creux qui est pourvu d'un couteau d'écroutage réglable et interchangeable et un élément de centrage et qui est relié à une butée qui délimite la longueur d'écroutage,
**caractérisé en ce**
**que** l'élément de centrage est configuré comme une pièce combinée (1, 2) séparée qui peut être introduite temporairement par glissement dans le support de couteau (10) et dans le tube conducteur, constituée par un mandrin de centrage (4) et un mandrin de support (3) relié à celui-ci, le support de couteau (10) présentant une zone qui loge le mandrin de centrage (4) qui est également configurée comme une butée pour la délimitation de la longueur d'écroutage et qui forme un palier pour le mandrin de centrage (4).

2. Dispositif selon la revendication 1,
**caractérisé en ce**
**que** le mandrin de support (3) est pourvu d'une section de type cône tronqué dans la zone d'extrémité.

3. Dispositif selon la revendication 2,
**caractérisé en ce**
**que** la section de type cône tronqué est divisée en deux sous-sections (6, 7) avec différentes inclinaisons de cône.

4. Dispositif selon la revendication 1,
**caractérisé en ce**
**que** la zone de côté frontal du mandrin de centrage (4) est arrondie (8).

5. Dispositif selon la revendication 1 et 4,
**caractérisé en ce**
**que** la zone centrale du mandrin de centrage (4) est configurée comme une poignée concave (9).

6. Dispositif selon l'une des revendications 1 à 5,
**caractérisé en ce**
**que** le mandrin de centrage (4) présente un plus petit diamètre (16) que le mandrin de support (3) et la transition du mandrin de centrage (4) au mandrin de support (3) est configurée comme une surface de butée (5).

7. Dispositif selon l'une des revendications 1 à 6,
**caractérisé en ce**
**que** la zone du support de couteau (10) qui loge le mandrin de centrage (4) est configurée comme une douille séparée (12) qui peut être pressée dans le support de couteau (10).

8. Dispositif selon la revendication 7,
**caractérisé en ce**
**que** la douille (12) présente une collerette de butée (13) dans une zone d'extrémité.

9. Dispositif selon la revendication 7 et 8,
**caractérisé en ce**
**qu'**un évidement (22) qui loge le mandrin de support (3) est prévu dans le côté frontal de la collerette de butée (13).

10. Dispositif selon les revendications 7 à 9,
**caractérisé en ce**
**que** le support de couteau (10) est fabriqué en une matière plastique résistante aux chocs.

11. Dispositif selon les revendications 7 à 10,
**caractérisé en ce**
**que** la douille (12) est fabriquée en métal.

12. Dispositif selon la revendication 1,
**caractérisé en ce**
**que** le couteau d'écroutage (23) présente un tranchant arrondi (25).
